# EUROPÄISCHE PATENTSCHRIFT

(11) **EP 4 454 085 B1**
(45) Veröffentlichungstag und Bekanntmachung des Hinweises auf die Patenterteilung: **29.10.2025**
(21) Anmeldenummer: 22826805.8
(22) Anmeldetag: 28.11.2022
(51) Int. Cl.: H02G 3/04

(54) **KABELKANAL FÜR DIE AUTOMATISIERTE VERDRAHTUNG EINER ELEKTRISCHEN STEUERUNGS- ODER SCHALTANLAGE**
CABLE DUCT FOR THE AUTOMATED WIRING OF AN ELECTRICAL CONTROL OR SWITCHING SYSTEM
CONDUIT DE CÂBLES POUR LE CÂBLAGE AUTOMATISÉ D'UN SYSTÈME DE COMMANDE OU DE COMMUTATION ÉLECTRIQUE

(30) Priorität: 20.12.2021 DE 102021133811
(43) Veröffentlichungstag der Anmeldung: 30.10.2024
(73) Patentinhaber: Rittal GmbH & Co. KG, 35745 Herborn (DE)
(72) Erfinder: WELLER, Ralf, 35759 Driedorf (DE); JUNG, Kevin, 35708 Haiger (DE); BÄCHLER, Andreas Michael, 35708 Haiger (DE)
(74) Vertreter: Angerhausen, Christoph
(86) Internationale Anmeldenummer: PCT/DE2022/100886
(87) Internationale Veröffentlichungsnummer: WO 2023/116966

(56) Entgegenhaltungen:
- EP-B1- 1 376 797
- EP-B1- 1 420 493
- EP-B1- 1 850 434
- DE-T2- 69 937 025
- ES-U- 278 280
- US-A1- 2018 006 440

## Beschreibung

Die Erfindung geht aus von einem Kabelkanal für die automatisierte Verdrahtung einer elektrischen Steuerungs- oder Schaltanlage, wobei der Kabelkanal einen Boden für die Montage auf einer Unterlage und zwei parallele Seitenwände aufweist, die jeweils von einer Mehrzahl sich von dem Boden senkrecht erstreckenden Zungen gebildet sind, wobei benachbarte Zungen derselben Seitenwand zwischen sich einen Schlitz für die Kabeldurchleitung mit einer Kabeleinführhilfe aufweisen, die an einem von dem Boden abgewandten freien Enden der benachbarten Zungen endstellig angeordnet ist, wobei die endstellige Kabeleinführhilfe in Erstreckungsrichtung der Zungen von den freien Enden zum Boden in eine Verjüngung des Schlitzes und die Verjüngung des Schlitzes in eine Aufweitung des Schlitzes mündet. Ein derartiger Kabelkanal ist aus der US 2018/006440 A1 bekannt. Ähnliche Kabelkanäle beschreiben auch die DE 201 13 694 U1, die DE 102 61 051 B4 und die DE 198 28 082 A1.

Die aus dem Stand der Technik bekannten Kabelkanäle sind im Bereich der manuellen Verdrahtung etablierter Stand der Technik, haben sich jedoch als ungeeignet für die automatisierte Verdrahtung herausgestellt. Dies liegt insbesondere daran, dass bei der automatisierten Verdrahtung Nacharbeiten, wie das manuelle Nachdrücken bereits im Kabelkanal verlegter Leiter, wenn diese sich aufgrund ihrer Eigenelastizität nachträglich wieder aus dem Kabelkanal herausbewegt haben, automatisiert kaum möglich ist.

Es ist somit die Aufgabe der Erfindung, einen Kabelkanal für die automatisierte Verdrahtung bereitzustellen, welcher das prozesssichere Einlegen der Leiter in den Kabelkanal und das verlässliche Zurückhalten der eingelegten Kabel in den Kabelkanal gewährleistet.

Diese Aufgabe wird durch einen Kabelkanal mit den Merkmalen des Anspruchs 1 gelöst.

Vorteilhafte Ausführungsformen der Erfindung sind jeweils Gegenstand der abhängigen Ansprüche.

Demgemäß ist vorgesehen, dass der Schlitz entlang der Länge des Schlitzes von der Aufweitung bis zum Boden mindestens zwei weitere Verjüngungen aufweist, die einen Durchlassquerschnitt mit einer unterschiedlichen minimalen Öffnungsweite aufweisen.

Die Kabeleinführhilfe kann die Funktion aufweisen, die über die Kabeleinführhilfe der Verjüngung automatisiert, etwa mit einem Knickarmroboter, zugeführten Kabel derart in Bezug auf die Verjüngung zu positionieren, dass bei einem weiteren Hineindrücken des Kabels in den Schlitz die Verjüngung prozesssicher ihren Öffnungsquerschnitt unter elastischer Verformung der benachbarten Zungen aufweitet. Dazu kann die Kabeleinführhilfe vorzugsweise V-förmig, oder im Wesentlichen V-förmig, oder trichterförmig ausgebildet sein.

Die Verjüngung kann den zwischen den benachbarten Zungen gebildeten Schlitz an dem freien Ende der Seitenwand bzw. der Zungen verschließen. Dazu kann die Verjüngung eine kleinere Öffnungsweite im Vergleich zu den erwarteten Querschnitten bzw. Durchmessern der zu verlegenden Kabel und ggf. sonstigen Leitungen aufweisen. Die Verjüngung des Schlitzes kann somit die Aufgabe übernehmen, die einmal über die Kabeleinführhilfe in den Schlitz eingelegten Kabel und sonstigen Leitungen in dem Schlitz zu halten, wenn diese beispielsweise aufgrund ihrer Eigenelastizität wieder in Richtung des freien Endes der Zungen drängen und dort möglicherweise aus dem Schlitz heraustreten könnten, wenn der Schlitz nicht verschlossen wäre, wie dies bei den bekannten Kabelkanälen üblich ist.

Wenn die Verjüngung in einem relaxierten Zustand der Zungen den Schlitz nicht vollständig oder im Wesentlichen vollständig verschließt, kann vorgesehen sein, dass die Verjüngung eine minimale Öffnungsweite aufweist, die geringer als der Querschnitt bzw. Durchmesser eines in dem Kabelkanal zu haltenden Drahtes ist.

Wenn der Kabelkanal, insbesondere die Seitenwände des Kabelkanals weitere Verjüngungen aufweisen, die beispielsweise entlang der Längskanten der Zungen angeordnet sind, um in Höhenrichtung des Kabelkanals senkrecht zu dem Boden den Kabelkanal in unterschiedliche Bestückungsabschnitte zu unterteilen, ist vorzugsweise der Öffnungsquerschnitt der an die Einführhilfe angrenzenden Verjüngung zumindest kleiner als der minimale Öffnungsquerschnitt der weiteren Verjüngungen im relaxierten Zustand der Zungen. Die Verjüngung ist somit dazu eingerichtet, einmal in den Kabelkanal über die Einführhilfe eingeführte Kabel in dem Kabelkanal, insbesondere in dem Schlitz, zu halten, nachdem die Kabel beispielsweise mit dem Endeffektor eines für die automatisierte Verdrahtung bereitgestellten Roboters unter Vorspannung der benachbarten Zungen und unter Aufweitung der Verjüngung in den Schlitz eingetrieben worden sind.

Die Aufweitung kann die Funktion übernehmen, es dem Kabel zu ermöglichen, aufgrund seines Eigengewichts tiefer in den Schlitz hinein zu fallen, wenn das Kabel unter Aufweitung der Verjüngung, beispielsweise von einem Endeffektor eines Knickarmroboters, unter Überwindung der Verjüngung in den Kabelkanal eingesetzt worden ist.

Die Kabeleinführhilfe kann bei einer Ausführungsform in Richtung von der Verjüngung zu einer Kabeleinführöffnung der Kabeleinführhilfe hin aufgeweitet sein. Beispielsweise kann die Kabeleinführhilfe in Richtung von der Verjüngung zu der Kabeleinführöffnung V-förmig oder im Wesentlichen V-förmig aufgeweitet sein.

Wenn die Aufweitung V-förmig oder im Wesentlichen V-förmig ausgebildet ist, kann die Aufweitung beispielsweise eine umgekehrte V-Form im Vergleich zu der Verjüngung aufweisen.

Der Schlitz kann sowohl in einem Abschnitt angrenzend an die Aufweitung als auch zumindest abschnittsweise über die Länge des Schlitzes von der Aufweitung bis zum Boden eine konstante Breite aufweisen.

Der Schlitz weist entlang der Länge des Schlitzes von der Aufweitung bis zum Boden mindestens eine weitere Verjüngung auf. Die weitere Verjüngung kann die Aufgabe aufweisen, den Kabelkanal in Längsrichtung der Zungen in unterschiedliche Bereiche zu unterteilen, beispielsweise um Leiter über die Höhe des Kabelkanals gruppiert oder separiert zu verlegen.

Der Schlitz weist mindestens zwei weitere Verjüngungen auf, die einen Durchlassquerschnitt mit einer unterschiedlichen minimalen Öffnungsweite aufweisen. Dies kann dazu dienen, den Kabelkanal in der Längsrichtung der Zungen zu konditionieren, etwa um Leiter abhängig von ihrem Querschnitt oder einem anderen Sortierkriterium aufzunehmen, vorzugsweise entsprechend der Verdrahtungsreihenfolge. Die Variabilität des Durchlassquerschnitts kann auch dazu dienen, die höhere Elastizität der Zungen in weiter von dem Boden abgewandten Abschnitten gegenüber näher am Boden angeordneten Abschnitten der Zunge zu kompensieren und somit eine gleichmäßige, erforderliche Vorspannkraft zur Überwindung der Vorsprünge über die gesamte Länge der Zungen und für jeden der Vorsprünge bereitzustellen.

Beispielsweise kann vorgesehen sein, dass die minimale Öffnungsweite derjenigen der beiden weiteren Verjüngungen, die weiter beabstandet von dem Boden als die andere weitere Verjüngung ist, kleiner als die minimale Öffnungsweite der näher am Boden angeordneten weiteren Verjüngung ist.

Die weitere Verjüngung kann von einem, vorzugsweise von genau einem, in den Schlitz ragenden Vorsprung an einer ersten von zwei gegenüberliegenden und den Schlitz begrenzenden Längskanten der benachbarten Zungen gebildet sein.

Die Längskanten können im Wesentlichen gerade und unkonturiert ausgebildet sein, mit Ausnahme des mindestens einen Vorsprungs, welcher die weitere Verjüngung zwischen den gegenüberliegenden Längskanten und des zwischen diesen ausgebildeten Schlitzes ausbildet.

Der sich von der ersten Längskante erstreckende Vorsprung der der ersten Längskante gegenüberliegenden zweiten Längskante kann unter einem Abstand, der der Öffnungsweite der weiteren Verjüngung entspricht, vorgelagert sein. Dabei kann die zweite Längskante zumindest im Bereich der weiteren Verjüngung, vorzugsweise auch der Verjüngung vor- und/oder nachgelagert, eine gerade und/oder unkonturierte Längskante sein.

Mehrere der weiteren Verjüngungen können von jeweils einem, vorzugsweise von jeweils genau einem, in den Schlitz ragenden Vorsprung gebildet sein, wobei die Vorsprünge in der Längsrichtung des Schlitzes abwechselnd ausgehend von einer der beiden gegenüberliegenden Längskanten in den Schlitz ragen und der jeweils anderen, geraden und/oder unkonturierten Längskante unter Einhaltung einer minimalen Öffnungsweite der jeweiligen weiteren Verjüngung vorgelagert sein können.

Die abwechselnd von den gegenüberliegenden Längskanten in den Schlitz hineinragenden Vorsprünge können den Schlitz in der Längsrichtung des Schlitzes mäanderförmig ausbilden.

Mindestens ein elastischer Rückhaltesteg kann sich von einer ersten der zwei parallelen Seitenwände durch den Kabelkanal hindurch in Richtung der anderen Seitenwand erstrecken. Dabei kann der Rückhaltesteg in dieser Erstreckungsrichtung eine Länge aufweisen, die kleiner als der Abstand der zwei parallelen Seitenwände zueinander ist. Der Rückhaltesteg weist die Funktion auf, bereits in den Kabelkanal eingelegte Kabel in dem Kabelkanal zu halten, während der Kabelkanal für das Einlegen weiterer Drähte noch nicht verschlossen ist, beispielsweise mit einem üblichen Kabelkanaldeckel, der auf die freien Enden der Zungen aufgerastet wird.

Der Rückhaltesteg kann an seinem der gegenüberliegenden Seitenwand zugewandten Ende ein freies Ende aufweist. Dies ermöglicht es dem Rückhaltesteg bei der automatisierten Verdrahtung, beispielsweise mit einem Verdrahtungsroboter, überfahren zu werden, wobei der Rückhaltesteg von dem Verdrahtungsroboter durch elastische Verformung verdrängt wird und nach dem Überfahren wieder in seine Ausgangsposition zurückspringt.

Dazu kann der Rückhaltesteg bei einer Ausführungsform an seinem ersten Ende an der ersten Seitenwand festgelegt sein und sich mit einem das freie Ende aufweisenden elastischen Federblatt von der ersten Seitenwand in Richtung der gegenüberliegenden Seitenwand erstrecken.

Das elastische Federblatt kann in seiner Erstreckungsrichtung von der der ersten Seitenwand zu der gegenüberliegenden zweiten Seitenwand eine Länge aufweisen, die kleiner als der Abstand der beiden Seitenwände zueinander ist.

Der Rückhaltesteg kann an seinem ersten Ende Klemmmittel für die Befestigung des Rückhaltestegs an mindestens einer Zunge oder zwischen und/oder an benachbarten Zungen der ersten Seitenwand aufweisen. Dabei kann der Rückhaltesteg ausgehend von dem ersten Ende, vorzugsweise daran einteilig angeformt, ein elastisches Federblatt aufweisen, mit dem sich der Rückhaltesteg in Richtung der gegenüberliegenden Seitenwand erstreckt.

Die Klemmmittel können mindestens eine Klemmaufnahme aufweisen, die nutförmig ausgebildet und dazu eingerichtet ist, im Reibschluss über eine Längskante einer der benachbarten Spangen auf die betreffende Spange aufgeschoben zu werden.

Vorzugsweise sind an den gegenüberliegenden Seiten des Klemmmittels, welche jeweils einer der beiden benachbarten Spangen zugewandt sind, jeweils eine der genannten Klemmaufnahmen ausgebildet.

Der Rückhaltesteg kann in Erstreckungsrichtung der Zungen unterhalb von der Aufweitung und oberhalb, vorzugsweise beabstandet von dem Boden angeordnet sein.

Besonders vorteilhaft kann sich jeweils mindestens ein eleatischer Rückhaltesteg von einer ersten und einer zweiten der beiden parallelen Seitenwände durch den Kabelkanal hindurch in Richtung der jeweils anderen Seitenwand erstrecken. Dabei können sich die von den gegenüberliegenden Seitenwänden erstreckenden Rückhaltestege paarweise aufeinander zu erstrecken und sich mit ihren freien Enden bis auf einen Mindestabstand einander annähern oder überlappen.

Die Rückhaltestege können insbesondere dazu eingerichtet sein, von einem Endeffektor eines Verdrahtungsautomaten, beispielsweise vom Endeffektor eines Verdrahtungsroboters, durch- oder überfahren zu werden, wobei der Rückhaltesteg, zumindest insoweit er elastisch ist, reversibel verdrängt wird, um das Hindurchtreten des Endeffektors zu erlauben. Aufgrund der Elastizität kann der Rückhaltesteg nach dem Durchlaufen wieder in seine Ausgangsposition zurückkehren. In der Ausgangsposition erstreckt sich der Rückhaltesteg, zumindest sein elastischer Anteil, beispielsweise das bereits beschriebene elastische Federblatt, im Wesentlichen senkrecht zu derjenigen Seitenwand, an welcher er montiert ist. Der Rückhaltesteg kann insbesondere mit seinem freien Ende unter einem Abstand zu der gegenüberliegenden Seitenwand angeordnet sein.

Insbesondere sollte das freie Ende des Rückhaltestegs, beispielsweise das freie Ende des elastischen Federblatts, ungelagert und frei beweglich im Kabelkanalquerschnitt angeordnet sein, um es in der zuvor beschriebenen Weise zu ermöglichen, dass das freie Ende des Rückhaltestegs, beispielsweise das elastische Federblatt, verdrängt wird, wenn der Rückhaltesteg beispielsweise mit dem Endeffektor eines Verdrahtungsroboters kollidiert, wenn der Verdrahtungsroboter beim Verlegen des Drahtes entlang des Kabelkanals geführt ist.

Der Kabelkanal kann an seinem Übergang von dem Boden zu den Zungen eine hinterschnittige Nut aufweisen, die das Greifen des Kabelkanals mit einem Greifer beispielsweise an einem Endeffektor eines Knickarmroboters erlaubt. Vorzugsweise weist der Kabelkanal an beiden gegenüberliegenden Längskanten des Bodens, entlang welcher die Spangen an den Boden angeformt sind, die bereits beschriebene Nut auf, um ein sicheres Greifen des Kabelkanals zu ermöglichen. Ein derartiger Kabelkanal samt Greifer ist beispielsweise in der WO 2021/037305 A2 beschrieben.

Weitere Einzelheiten der Erfindung werden anhand der nachstehenden Figuren erläutert. Dabei zeigt:
- Figur 1: eine beispielhafte Ausführungsform eines erfindungsgemäßen Kabelkanals in der Seitenansicht;
- Figur 2: eine Anordnung aus einem erfindungsgemäßen Kabelkanal, der von einem Greifer für das Handling des Kabelkanals gegriffen ist;
- Figur 3: eine weitere Ausführungsform eines erfindungsgemäßen Kabelkanals mit darin eingesetzten Rückhaltestegen;
- Figur 4: eine Seitenansicht der Ausführungsform gemäß Figur 3; und
- Figur 5: eine beispielhafte Ausführungsform eines Rückhaltestegs.

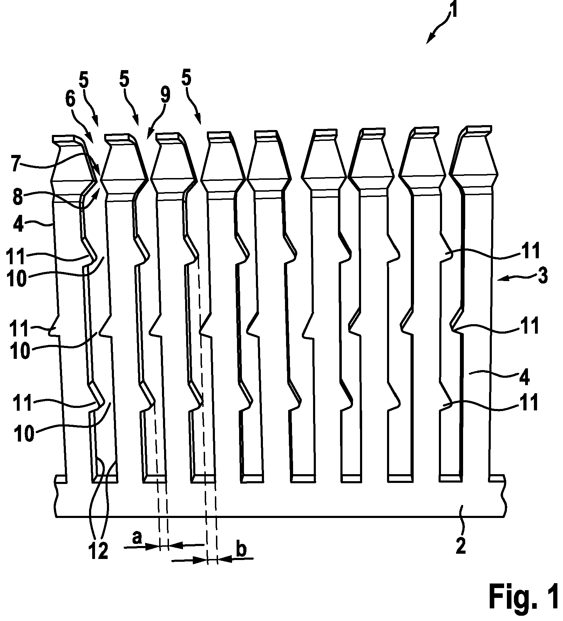

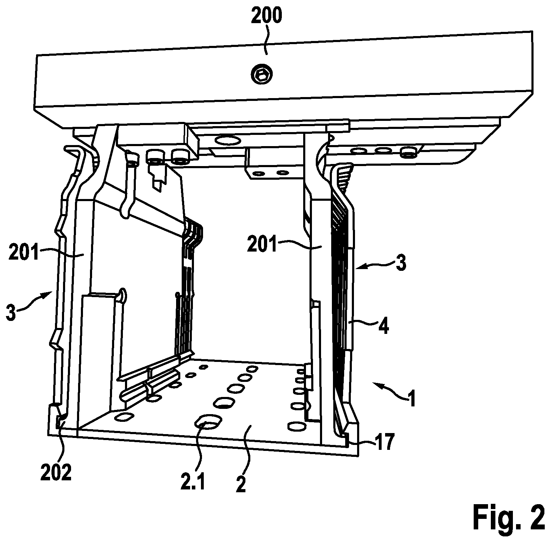

Die Figur 1 zeigt eine beispielhafte Ausführungsform eines erfindungsgemäßen Kabelkanals 1 in der Seitenansicht. Dieser weist einen Boden 2 auf, der dazu eingerichtet ist, auf einer Unterlage montiert zu werden. Die Unterlage kann beispielsweise eine Montageplatte eines Schaltschranks sein. Dazu kann der Boden 2 in der aus dem Stand der Technik bekannten Weise Ausnehmungen und Durchbrüche 2.1 (vergleiche Figur 2) für das Verschrauben des Kabelkanals 1 auf einer Montageplatte oder dergleichen aufweisen.

Entlang der Längskanten des Bodens 2 sind die Seitenwände 3 des Kabelkanals 1 ausgebildet, insbesondere einteilig angeformt. Die Seitenwände 3 wiederum bestehen jeweils aus einer Vielzahl Zungen 4, die Schlitze 5 zwischen sich abgrenzen. Durch die Schlitze 5 hindurch können Leiter in den Kabelkanal 1 eingeführt werden.

Im Zuge der automatisierten Verdrahtung erfolgt die Kabeleinführung durch die Seitenwand 3 über die offene Oberseite des Kabelkanals 1, mithin über die freien Enden der Zungen 4 bzw. der zwischen benachbarten Zungen 4 ausgebildeten Schlitze 5. Dazu weist der erfindungsgemäße Kabelkanal 1 eine Kabeleinführhilfe 6 auf, die in der gezeigten Ausführungsform der Erfindung eine V-förmige Aufweitung des Schlitzes 5 aufweist oder als eine solche ausgebildet ist. Die V-förmige Aufweitung ermöglicht es, die biegeschlaffen Leiter, beispielsweise Kupferlitzen und dergleichen, prozesssicher vollautomatisiert beispielsweise mit Hilfe eines Knickarmroboters über die Kabeleinführhilfe 6 in den Schlitz 5 einzuführen. Nachdem der Leiter über die freien Enden des Schlitzes 5, d.h. über die Kabeleinführhilfe 6 in den obersten Abschnitt des Schlitzes 5 eingeführt worden ist, wo der Leiter noch leicht wieder aus dem Schlitz 5 austreten kann, ist es erforderlich, dass der Leiter, etwa mit Hilfe des Endeffektors, weiter nach unten gedrückt wird, damit er eine Verjüngung 7 des Schlitzes, welche unmittelbar an die Kabeleinführhilfe 6 bzw. die V-förmige Kontur der Kabeleinführhilfe 6 angrenzt, unter elastischer Verformung der Zungen 4 überwinden kann. Die Verjüngung 7 verjüngt den Schlitz 5 gerade zumindest auf eine Öffnungsweite, welche im relaxierten Zustand der Zungen 4, d.h. wenn die Zungen 4 nicht mechanisch belastet sind, beispielsweise von einem über die Kabeleinführhilfe 6 eingedrückten Leiter, in der in der Figur 1 gezeigten Ausgangsposition angeordnet sind, in welcher der Öffnungsquerschnitt geringer als ein Leiterquerschnitt ist. Für das Einsetzen des Leiters ist es somit erforderlich, dass der Leiter unter Druck die Verjüngung 7 überwindet, wobei die Verjüngung 7 für das Hindurchtreten des Leiters kurzzeitig elastisch aufgeweitet wird. Nachdem der Leiter die Verjüngung 7 passiert hat und in die Aufweitung 8 des Schlitzes 5 überführt worden ist, können die aufgeweiteten Zungen 4 wieder relaxierten und in den in der Figur 1 dargestellten Zustand übergehen, bei welchem die Verjüngung 7 wieder auf das beschriebene Ausgangsöffnungsmaß verkleinert ist, welches vorzugsweise zumindest geringer als ein verarbeiteter Leiterquerschnitt ist.

In weiterer Längserstreckung des Schlitzes 5 von der Kabeleinführhilfe 6 hin zum Boden 2 des Kabelkanals 1 sind die Schlitze 5 durch weitere Verjüngungen 10, vorliegend durch drei weitere Verjüngungen je Schlitz 5 in ihrer Öffnungsweite a, b limitiert, wobei die Öffnungsweite a, b derjenigen der weiteren Verjüngungen 10, die weiter beabstandet von dem Boden 2 als eine der weiteren Verjüngungen 10, die der Einführhilfe 6 näher beigeordnet ist, kleiner sein kann. Dies berücksichtigt den Umstand, dass die Zungen im oberen Bereich, d.h. je weiter sie von dem Boden 2 beabstandet sind, durch ihre Länge deutlich elastischer sind als im unteren Bereich.

Die Vorsprünge 11 sind erkennbar versetzt zueinander angeordnet, wobei sie in der Einführrichtung eines Leiters in den Schlitz 5 von oben nach unten zur Mitte des Schlitzes 5 hin abgeschrägt sind. Von unten nach oben betrachtet steht der Vorsprung 11 lotrecht auf der Längskante 12. An der Unterseite weist der Vorsprung 11 eine Kante auf, die senkrecht zu der Längserstreckung der Längskante 12 verläuft und damit einen Widerhaken für eingelegte Leiter und Kabel bildet.

Um die Leitungen im Querschnitt des Kabelkanals 1 zu verteilen, können beliebig viele der Vorsprünge 11 versetzt zueinander angeordnet sein. Es ist insbesondere vorteilhaft, wenn die Vorsprünge 11 in ihrer Abmessung senkrecht zu der Längskante 12 von oben nach unten abnehmend ausgeführt sind und somit ein leichtes Eindrücken des Drahtes selbst bis unter den untersten Vorsprung 11 ermöglicht wird. Dies berücksichtigt den Umstand, dass die Zungen 4 im oberen Bereich aufgrund ihrer Länge deutlich elastischer sind als im unteren Bereich, in welchem sie an den Boden 2 gekoppelt, beispielsweise einteilig angeformt sind.

Die Figur 2 veranschaulicht eine Ausführungsform des erfindungsgemäßen Kabelkanals 1, welcher an seinem Übergang von den Seitenwänden 3 zu dem Boden 2 eine Längsnut 17 aufweist. Diese Nut 17 dient für das prozesssichere Handling des Kabelkanals 1 mit einem Roboter. Dargestellt ist ein Greifer 200 eines Bestückungsroboters, der mit Greiferplatten 201 an den gegenüberliegenden Seitenwänden 3 des Kabelkanals 1 angreift, genauer mit jeweils einem Greifersteg 202 an den voneinander abgewandten Außenseiten der Greiferplatten 201 in die Nut 17 am Übergang zwischen dem Boden 2 und den Seitenwänden 3 eingreift. Der Boden 2 weist weiterhin Ausnehmungen 2.1 auf, die der Montage des Kabelkanal 1 auf einer Unterlage, beispielsweise auf einer Montageplatte dienen. Durch die flächige Ausführung der Greiferplatten 201 wird eine Stabilisierung der hochgradig elastischen Seitenwände 3 beim Handling des Kabelkanals 1 erreicht und damit eine Zerstörung des Kabelkanals 1, insbesondere das Herausbrechen einzelner oder mehrerer Zungen 4 sicher vermieden.

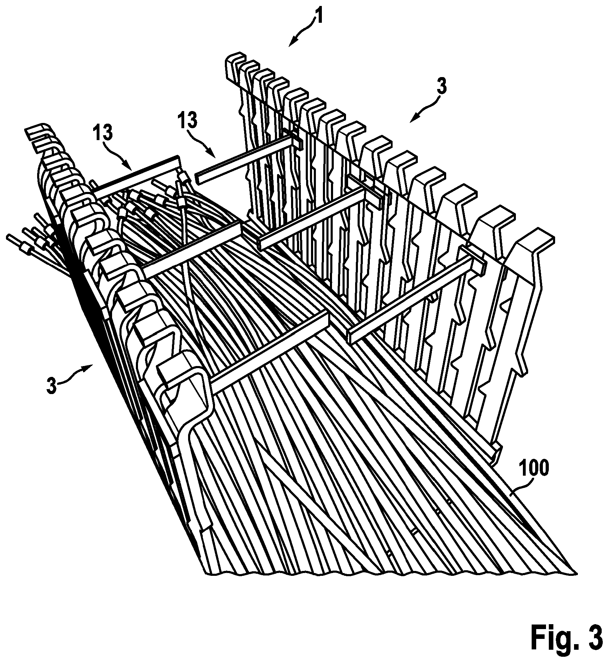

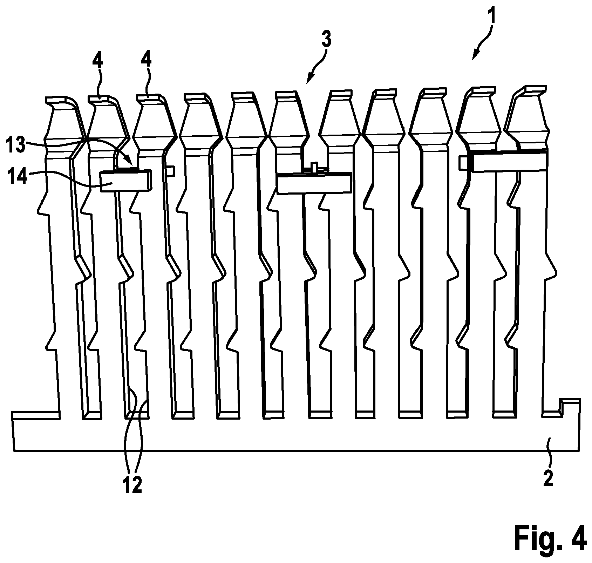

Die Figuren 3 bis 5 veranschaulichen einer Ausführungsform des erfindungsgemäßen Kabelkanals, bei dem eine Mehrzahl Rückhaltestege 13 vorgesehen sind, die in die Seitenwände 3 eingesetzt sind. Die Rückhaltestege 13 verhindern, dass bereits in den Kabelkanal 1 eingeführte und/oder eingelegte Drähte sich wieder aus dem Kabelkanal 1 herausbewegen können, beispielsweise aufgrund einer elastischen Eigenspannung, welche den Drähten beim Einlegen in den Kanal 1 aufgeprägt worden ist. Vorliegend weisen die Rückhaltestege 13 eine Länge senkrecht zur Seitenwand 3 auf, welche ungefähr der Hälfte der Breite des Kabelkanals 1 senkrecht zu den Seitenwänden 3 entspricht. Die Rückhaltestege 13 weisen ein elastisches Federblatt 15 auf, sodass bei der Verlegung der Drähte 100 etwa mithilfe eines Verdrahtungsroboters der Endeffektor des Verdrahtungsroboters den Kabelkanal 1 störungsfrei durchfahren kann, um den Draht im Kanal zu verlegen. Um die Kabel unterhalb der Rückhaltestege 13 verlegen zu können, muss der Roboter mit seinem Endeffektor bis unterhalb der Rückhaltestege 13 eintauchen, was wiederum zur Folge hat, dass der Endeffektor bei dem Verlegen entlang des Kanals 1 die Rückhaltestege 13 passieren können muss, ohne mit ihnen zu kollidieren. Dazu ist abweichend von den aus dem Stand der Technik bekannten Rückhaltestege vorgesehen, dass der Rückhaltesteg 13 lediglich an einer der gegenüberliegenden Seitenwände 3, zwischen welchen sich der Rückhaltesteg 13 erstreckt, gehalten ist und an dem gegenüberliegenden Ende ein freies Ende aufweist. Das freie Ende ist als Federblatt 15 ausgebildet, sodass der Rückhaltesteg 13 bzw. dessen Federblatt 15 bei dem Aufeinandertreffen mit dem Endeffektor des Roboters reversibel verdrängt werden kann. Aufgrund der beim Verdrängen aufgerägten Rückstellkraft des Federblatts 15 kann der Rückhaltesteg 13 in seine in den Figuren gezeigte gerade Ausgangsform unmittelbar nach dem Passieren des Endeffektors zurückkehren, sodass das Heraustreten von Kabeln 100 aus dem Kanal 1 wirkungsvoll verhindert wird.

Bei der in den Figuren 3 bis 5 gezeigten Ausführungsform erstrecken sich die Rückhaltestege 13 bzw. die Federblätter 15 der Rückhaltestege 13 im Wesentlichen über den halben Abstand zwischen den Seitenwänden 3. Demgemäß kann vorgesehen sein, dass sich mehr oder weniger exakt gegenüberstehend jeweils ein Rückhaltesteg 13 an der jeweiligen Seitenwand 3 angebunden ist, sodass die beiden Rückhaltestege 13 mit ihren freien Enden aufeinander zugerichtet sind. Dabei können sich die Rückhaltesteg 13 bzw. die Federblätter 15 der Rückhaltestege 13 bis auf einen Minimalabstand annähern, berühren oder sogar überlappen.

Die Rückhaltestege 13 sind über ein Klemmmittel 14 an den Zungen 4 der Seitenwände 3 bzw. in dem Schlitz 5 zwischen benachbarten Zungen 4 arretiert, wobei das Klemmmittel 14 über eine Klemmaufnahme 16 mit vorzugsweise beiden, jedoch mindestens einer der beiden Zungen 4 im Reibschluss steht, um den Rückhaltesteg 13 an der Zunge 4 oder an den beiden benachbarten Zungen 4 zu arretieren.

Der Kabelkanal 1 kann in bekannter Weise als ein extrudiertes und gestanztes Kunststoffbauteil ausgebildet sein, bei dem die Zungen 4 die bauteilbedingte Flexibilität aufweisen. Auch die Rückhaltestege 13 können aus einem elastischen Kunststoffmaterial ausgebildet sein. Insbesondere kann der Rückhaltesteg 13 einteilig und insgesamt aus einem einzigen Kunststoffmaterial ausgebildet sein, welches die für die Bereitstellung der Elastizität des Federblatts 15 erforderliche Materialsteifigkeit aufweist.

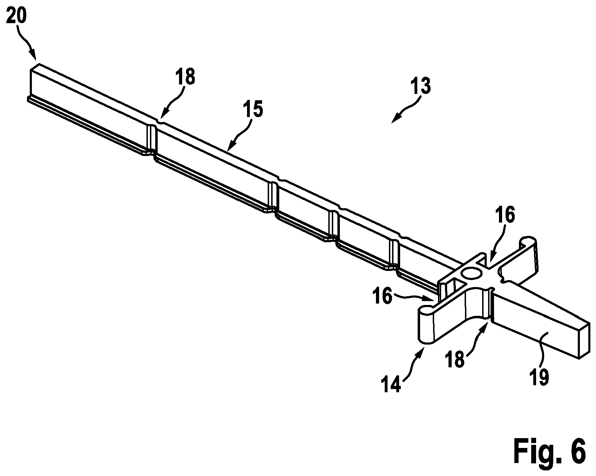

Die Figur 6 zeigt eine Ausführungsform eines erfindungsgemäßen Rückhaltestegs 13, der insbesondere dazu eingerichtet ist, ohne die Verwendung eines gegenüberstehenden, komplementären Rückhaltestegs die gesamte Kabelkanalbreite mit seinem Federblatt 15 zu überbrücken. Mithin ist der Rückhaltesteg 13 ein einer ersten der gegenüberliegenden Seitenwände des Kabelkanals in der zuvor beschriebenen Weise festgelegt und erstreckt sich mit seinem Federblatt 15 von dieser Seitenwand in Richtung der zweiten, gegenüberliegenden Seitenwand. Mit seinem von dem Klemmmittel 14 abgewandten freien Ende 20 kann er bis auf einen geringen Abstand der zweiten Seitenwand angenähert sein, wobei seine freie Beweglichkeit erhalten wird, um bei dem Überfahren des Federblatts 15 das zuvor beschriebene, elastische Verdrängen des Federblatts 15 zu ermöglichen.

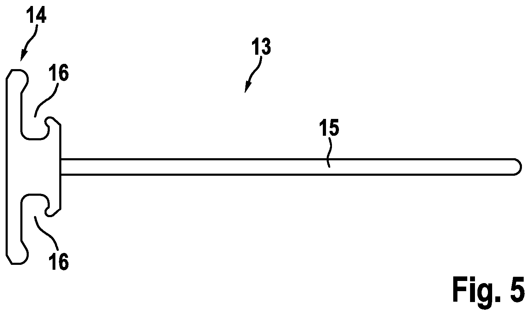

Um den Rückhaltesteg 13 an eine gegebene Kabelkanalbreite anzupassen, weist das Federblatt 15 eine Mehrzahl Sollbruchstellen 18 auf, welche gängige Kabelkanalbreiten repräsentieren. Für das einfache Handling weist der Rückhaltesteg 13 an dem Klemmmittel 14, mithin an einem von dem freien Ende 20 abgewandten Ende ein Griffstück 19 auf. Auch das Griffstück 19 kann über eine weitere Sollbruchstelle 18 an dem Klemmmittel 14 befestigt sein, um nach der Montage bedarfsweise das Griffstück 19 entfernen zu können, beispielsweise falls es bei dem weiteren Aufbau der Schaltanlage eine Störkontur darstellen sollte. Der Rückhaltesteg 13, wie auch der Rückhaltesteg gemäß Figur 5 kann als ein 2K-Kunststoffbauteil ausgebildet sein, wobei das Griffstück 19 eine auf die Verklemmung an den Zungen des Kabelkanals ausgerichtete Materialfestigkeit aufweist, während das Federblatt 15 die für seine elastische Verdrängung erforderliche Festigkeit und Elastizität aufweist.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: Kabelkanal
- 2: Boden
- 2.1: Ausnehmung
- 3: Seitenwand
- 4: Zunge
- 5: Schlitz
- 6: Kabeleinführhilfe
- 7: Verjüngung
- 8: Aufweitung
- 9: Kabeleinführöffnung
- 10: weitere Verjüngung
- 11: Vorsprung
- 12: Längskante
- 13: Rückhaltesteg
- 14: Klemmmittel
- 15: Federblatt
- 16: Klemmaufnahme
- 17: Nut
- 18: Sollbruchstelle
- 19: Griffstück
- 20: freies Ende
- 200: Greifer/Endeffektor
- 201: Greiferplatte
- 202: Greifersteg
- x: Erstreckungsrichtung
- a: erste Öffnungsweite
- b: zweite Öffnungsweite

## Patentansprüche

1. Kabelkanal (1) für die automatisierte Verdrahtung einer elektrischen Steuerungs- oder Schaltanlage, wobei der Kabelkanal (1) einen Boden (2) für die Montage auf einer Unterlage und zwei parallele Seitenwände (3) aufweist, die jeweils von einer Mehrzahl sich von dem Boden (2) senkrecht erstreckenden Zungen (4) gebildet sind, wobei benachbarte Zungen (4) derselben Seitenwand (3) zwischen sich einen Schlitz (5) für die Kabeldurchleitung mit einer Kabeleinführhilfe (6) aufweisen, die an einem von dem Boden (2) abgewandten freien Enden der benachbarten Zungen (4) endstellig angeordnet ist, wobei die endstellige Kabeleinführhilfe (6) in Erstreckungsrichtung der Zungen (4) von den freien Enden zum Boden (2) in eine Verjüngung (7) des Schlitzes (5) und die Verjüngung (7) des Schlitzes (5) in eine Aufweitung (8) des Schlitzes (5) mündet, wobei der Schlitz (5) entlang der Länge des Schlitzes (5) von der Aufweitung (8) bis zum Boden (2) mindestens zwei weitere Verjüngungen (10) aufweist, **dadurch gekennzeichnet, dass** die zwei weiteren Verjüngungen einen Durchlassquerschnitt mit einer unterschiedlichen minimalen Öffnungsweite (a, b) aufweisen.

2. Kabelkanal (1) nach Anspruch 1, bei dem die Kabeleinführhilfe (6) in Richtung von der Verjüngung (7) zu einer Kabeleinführöffnung (9) der Kabeleinführhilfe (6) hin aufgeweitet ist.

3. Kabelkanal (1) nach Anspruch 2, bei dem die Kabeleinführhilfe (6) in Richtung von der Verjüngung (7) zu der Kabeleinführöffnung (9) V-förmig oder im Wesentlichen V-förmig aufgeweitet ist.

4. Kabelkanal (1) nach einem der vorangegangenen Ansprüche, bei dem die Aufweitung (8) V-förmig oder im Wesentlichen V-förmig ausgebildet ist, wobei die Aufweitung (8) vorzugsweise eine umgekehrte V-Form im Vergleich zu der Verjüngung (7) aufweist.

5. Kabelkanal (1) nach einem der vorangegangenen Ansprüche, bei dem der Schlitz (5) sowohl in einem Abschnitt angrenzend an die Aufweitung (8) als auch zumindest abschnittsweise über die Länge des Schlitzes (5) von der Aufweitung (8) bis zum Boden (2) eine konstante Breite aufweist.

6. Kabelkanal (1) nach einem der vorangegangenen Ansprüche, bei dem die minimale Öffnungsweite (a, b) derjenigen der beiden weiteren Verjüngungen (10), die weiter beabstandet von dem Boden (2) als die andere weitere Verjüngung (10) ist, kleiner als die minimale Öffnungsweite (a, b) der näher am Boden (2) angeordneten weiteren Verjüngung (7) ist.

7. Kabelkanal (1) nach einem der vorangegangenen Ansprüche, bei dem die mindestens zwei weiteren Verjüngungen (10) von je einem, vorzugsweise von genau einem, in den Schlitz (5) ragenden Vorsprung (11) an einer ersten von zwei gegenüberliegenden und den Schlitz (5) begrenzenden Längskanten (12) der benachbarten Zungen (4) gebildet sind.

8. Kabelkanal (1) nach Anspruch 7, bei dem der sich von der ersten Längskante (12) erstreckende Vorsprung (11) der der ersten Längskante (12) gegenüberliegenden zweiten Längskante (12) unter einem Abstand, der der Öffnungsweite (a, b) der weiteren Verjüngung (7) entspricht, vorgelagert ist, wobei die zweite Längskante (12) zumindest im Bereich der weiteren Verjüngung (7), vorzugsweise weiterhin der Verjüngung (7) vor- und nachgelagert, eine gerade und/oder unkonturierte Längskante (12) ist.

9. Kabelkanal (1) nach einem der vorangegangenen Ansprüche, bei dem mehrere der weiteren Verjüngungen (7) von jeweils einem, vorzugsweise von jeweils genau einem, in den Schlitz (5) ragenden Vorsprung (11) gebildet ist, wobei die Vorsprünge (11) in der Längsrichtung (x) des Schlitzes (5) abwechselnd ausgehend von einer der beiden gegenüberliegenden Längskanten (12) in den Schlitz (5) ragen und der jeweils anderen, geraden und/oder unkonturierten Längskante (12) unter Einhaltung der minimalen Öffnungsweite (a, b) der jeweiligen weiteren Verjüngung (7) vorgelagert sind.

10. Kabelkanal (1) nach Anspruch 9, bei dem die abwechselnd von den gegenüberliegenden Längskanten (12) in den Schlitz (5) hineinragenden Vorsprünge (11) den Schlitz (5) in der Längsrichtung (x) mäanderförmig ausbilden.

11. Kabelkanal (1) nach einem der vorangegangenen Ansprüche, bei dem sich mindestens ein elastischer Rückhaltesteg (13) ausgehend von einer ersten der zwei parallelen Seitenwände (3) durch den Kabelkanal (1) hindurch in Richtung der gegenüberliegenden Seitenwand (3) erstreckt, wobei der Rückhaltesteg (13) an seinem der gegenüberliegenden Seitenwand (3) zugewandten Ende ein freies Ende aufweist.

12. Kabelkanal (1) nach Anspruch 11, bei dem der Rückhaltesteg (13) an seinem ersten Ende an der ersten Seitenwand (3) festgelegt ist sich mit einem das freie Ende aufweisenden elastischen Federblatt (15) in Richtung der gegenüberliegenden Seitenwand (3) erstreckt.

13. Kabelkanal (1) nach Anspruch 12, bei dem das elastischen Federblatt (15) in seiner Erstreckungsrichtung (x) von der der ersten Seitenwand (3) zu der gegenüberliegenden zweiten Seitenwand (3) eine Länge aufweist, die kleiner als der Abstand der beiden Seitenwände (3) zueinander ist.

14. Kabelkanal (1) nach einem der Ansprüche 11 bis 13, bei dem der Rückhaltesteg (13) an seinem ersten Ende Klemmmittel (14) für die Befestigung des Rückhaltestegs (13) an mindestens einer Zunge (4) oder zwischen benachbarten Zungen (4) der ersten Seitenwand (3) aufweist, wobei der Rückhaltesteg (13) ausgehend von dem ersten Ende, vorzugsweise daran einteilig angeformt, ein elastisches Federblatt (15) aufweist, mit dem sich der Rückhaltesteg (13) in Richtung der gegenüberliegenden Seitenwand (3) erstreckt.

15. Kabelkanal (1) nach einem der Ansprüche 11 bis 14, bei dem der Rückhaltesteg (13) in Erstreckungsrichtung der Zungen (4) unterhalb von der Aufweitung (8) und oberhalb, vorzugsweise beabstandet von dem Boden (2) angeordnet ist.

16. Kabelkanal (1) nach einem der Ansprüche 11 bis 15, bei dem sich jeweils mindestens ein eleatischer Rückhaltesteg (13) von einer ersten und einer zweiten der beiden parallelen Seitenwände (3) durch den Kabelkanal (1) hindurch in Richtung der jeweils anderen Seitenwand (3) erstreckt, wobei sich die von den gegenüberliegenden Seitenwänden (3) erstreckenden Rückhaltestege (13) paarweise aufeinander zu erstrecken und sich mit ihren freien Enden bis auf einen Mindestabstand einander annähern oder überlappen.

## Claims

1. Cable duct (1) for the automated wiring of an electrical control or switching system, wherein the cable duct (1) has a base (2) for mounting on a support and two parallel side walls (3), which are each formed by a plurality of tongues (4) extending perpendicularly from the base (2), wherein adjacent tongues (4) of the same side wall (3) have between them a slot (5) for the cable passage with a cable insertion aid (6), which is arranged at the free ends of the adjacent tongues (4) facing away from the base (2), wherein the cable insertion aid (6) opens in the direction of extension of the tongues (4) from the free ends to the base (2) into a tapering (7) of the slot (5) and the tapering (7) of the slot (5) opens into a widening (8) of the slot (5), wherein the slot (5) has at least two further taperings (10) along the length of the slot (5) from the widening (8) to the base (2), **characterized in that** the two further taperings (10) have a passage cross-section with a different minimum opening width (a, b).

2. Cable duct (1) according to claim 1, in which the cable insertion aid (6) is widened in the direction from the tapering (7) to a cable insertion opening (9) of the cable insertion aid (6).

3. Cable duct (1) according to claim 2, in which the cable insertion aid (6) is widened in the direction from the tapering (7) to the cable insertion opening (9) in a V-shaped or substantially V-shaped manner.

4. Cable duct (1) according to one of the preceding claims, in which the widening (8) is formed in a V-shaped or substantially V-shaped manner, wherein the widening (8) preferably has an inverted V-shape in comparison with the tapering (7).

5. Cable duct (1) according to one of the preceding claims, in which the slot (5) has a constant width both in a section adjacent to the widening (8) and also at least in sections over the length of the slot (5) from the widening (8) to the base (2).

6. Cable duct (1) according to one of the preceding claims, in which the minimum opening width (a, b) of that of the two further taperings (10) which is further spaced apart from the base (2) than the other further tapering (10) is smaller than the minimum opening width (a, b) of the further tapering (7) arranged closer to the base (2).

7. Cable duct (1) according to one of the preceding claims, in which the at least two further taperings (10) are formed by in each case one, preferably by exactly one, projection (11) projecting into the slot (5) on a first of two opposite longitudinal edges (12), delimiting the slot (5), of the adjacent tongues (4).

8. Cable duct (1) according to claim 7, in which the projection (11) extending from the first longitudinal edge (12) is arranged upstream of the second longitudinal edge (12) opposite the first longitudinal edge (12) at a distance which corresponds to the opening width (a, b) of the further tapering (7), wherein the second longitudinal edge (12) is a straight and/or uncontoured longitudinal edge (12) at least in the region of the further tapering (7), preferably furthermore upstream and downstream of the tapering (7).

9. Cable duct (1) according to one of the preceding claims, in which a plurality of the further taperings (7) are formed by in each case one, preferably by in each case exactly one, projection (11) projecting into the slot (5), wherein the projections (11) project into the slot (5) in the longitudinal direction (x) of the slot (5) alternately starting from one of the two opposite longitudinal edges (12) and are arranged upstream of the in each case other, straight and/or uncontoured longitudinal edge (12) while maintaining the minimum opening width (a, b) of the respective further tapering (7).

10. Cable duct (1) according to claim 9, in which the projections (11) projecting into the slot (5) alternately from the opposite longitudinal edges (12) form the slot (5) in a meandering manner in the longitudinal direction (x).

11. Cable duct (1) according to one of the preceding claims, in which at least one elastic retaining web (13) extends starting from a first of the two parallel side walls (3) through the cable duct (1) in the direction of the opposite side wall (3), wherein the retaining web (13) has a free end at its end facing the opposite side wall (3).

12. Cable duct (1) according to claim 11, in which the retaining web (13) is fixed at its first end to the first side wall (3) and extends with an elastic leaf spring (15) having the free end in the direction of the opposite side wall (3).

13. Cable duct (1) according to claim 12, in which the elastic leaf spring (15) has, in its direction of extent (x) from the first side wall (3) to the opposite second side wall (3), a length which is smaller than the distance between the two side walls (3).

14. Cable duct (1) according to one of claims 11 to 13, in which the retaining web (13) has, at its first end, clamping means (14) for fastening the retaining web (13) to at least one tongue (4) or between adjacent tongues (4) of the first side wall (3), wherein the retaining web (13) has, starting from the first end, preferably integrally formed thereon, an elastic leaf spring (15) with which the retaining web (13) extends in the direction of the opposite side wall (3).

15. Cable duct (1) according to one of claims 11 to 14, in which the retaining web (13) is arranged, in the direction of extent of the tongues (4), below the widening (8) and above, preferably spaced apart from, the base (2).

16. Cable duct (1) according to one of claims 11 to 15, in which in each case at least one elastic retaining web (13) extends from a first and a second of the two parallel side walls (3) through the cable duct (1) in the direction of the respective other side wall (3), wherein the retaining webs (13) extending from the opposite side walls (3) extend towards one another in pairs and approach or overlap one another with their free ends up to a minimum distance.

## Revendications

1. Goulotte de câbles (1) pour le câblage automatisé d'une installation électrique de commande ou de commutation, la goulotte de câbles (1) présentant un fond (2) destiné à être monté sur un support et deux parois latérales parallèles (3) qui sont chacune formées par une pluralité de languettes (4) s'étendant perpendiculairement au fond (2), les languettes adjacentes (4) d'une même paroi latérale (3) présentant entre elles une fente (5) pour le passage des câbles avec un dispositif d'introduction de câbles (6) qui est agencé à l'extrémité des languettes adjacentes (4) opposées au fond (2), le dispositif d'introduction de câbles (6) situé à l'extrémité débouchant dans le sens longitudinal des languettes (4) depuis les extrémités libres vers le fond (2), sur un rétrécissement (7) de la fente (5) et le rétrécissement (7) de la fente (5) sur un élargissement (8) de la fente (5),
la fente (5) présentant, le long de la longueur de la fente (5), depuis l'élargissement (8) jusqu'au fond (2), au moins deux autres rétrécissements (10), **caractérisés en ce que** les deux autres rétrécissements présentent une section transversale de passage avec une largeur d'ouverture minimale différente (a, b).

2. Goulotte de câbles (1) selon la revendication 1, dans laquelle le dispositif d'introduction de câbles (6) est élargi dans la direction allant du rétrécissement (7) vers une ouverture d'introduction de câbles (9) du dispositif d'introduction de câbles (6).

3. Goulotte de câbles (1) selon la revendication 2, dans laquelle le dispositif d'introduction de câbles (6) est élargi en forme de V ou essentiellement en forme de V dans la direction allant du rétrécissement (7) vers l'ouverture d'introduction de câbles (9).

4. Goulotte de câbles (1) selon l'une des revendications précédentes, dans laquelle l'élargissement (8) est en forme de V ou essentiellement en forme de V, l'élargissement (8) présentant de préférence une forme de V inversé par rapport au rétrécissement (7).

5. Goulotte de câbles (1) selon l'une des revendications précédentes, dans laquelle la fente (5) présente une largeur constante aussi bien dans une partie adjacente à l'élargissement (8) qu'au moins par sections sur la longueur de la fente (5) depuis l'élargissement (8) jusqu'au fond (2).

6. Goulotte de câbles (1) selon l'une des revendications précédentes, dans laquelle la largeur d'ouverture minimale (a, b) de l'un des deux autres rétrécissements (10) qui est plus éloigné du fond (2) que l'autre rétrécissement (10) est inférieure à la largeur d'ouverture minimale (a, b) de l'autre rétrécissement (7) agencé plus près du fond (2).

7. Goulotte de câbles (1) selon l'une des revendications précédentes, dans laquelle les au moins deux autres rétrécissements sont formés chacun par une saillie (11), de préférence exactement une saillie qui dépasse dans la fente (5) sur un premier des deux bords longitudinaux (12) opposés des languettes adjacentes (4) qui délimitent la fente (5).

8. Goulotte de câbles (1) selon la revendication 7, dans laquelle la saillie (11) du deuxième bord longitudinal (12) opposé au premier bord longitudinal (12) s'étendant à partir du premier bord longitudinal (12) est située en avant de celui-ci à une distance qui correspond à la largeur d'ouverture (a, b) du rétrécissement supplémentaire (7), le deuxième bord longitudinal (12) étant, au moins dans la zone du rétrécissement supplémentaire (7), de préférence en amont et en aval du rétrécissement (7), un bord longitudinal droit et/ou non profilé (12).

9. Goulotte de câbles (1) selon l'une des revendications précédentes, dans laquelle plusieurs des autres rétrécissements (7) sont formés chacun par une saillie (11) dépassant dans la fente (5), de préférence exactement une saillie, les saillies (11) dépassant dans la fente (5) en alternance dans la direction longitudinale (x) de la fente (5) en partant alternativement de l'un des deux bords longitudinaux opposés (12) et étant situées en avant de l'autre bord longitudinal droit et/ou non profilé (12) tout en respectant la largeur d'ouverture minimale (a, b) du rétrécissement supplémentaire (7) correspondant.

10. Goulotte de câbles (1) selon la revendication 9, dans laquelle les saillies (11) dépassant alternativement dans la fente (5) à partir des bords longitudinaux opposés (12) forment la fente (5) en forme de méandres dans la direction longitudinale (x).

11. Goulotte de câbles (1) selon l'une des revendications précédentes, dans laquelle au moins une nervure de retenue élastique (13) s'étend à partir d'une première des deux parois latérales parallèles (3) à travers la goulotte de câbles (1) en direction de la paroi latérale opposée (3), la nervure de retenue (13) présentant une extrémité libre à son extrémité tournée vers la paroi latérale opposée (3).

12. Goulotte de câbles (1) selon la revendication 11, dans laquelle la nervure de retenue (13) est fixée à sa première extrémité à la première paroi latérale (3) et s'étend avec une lame élastique (15) présentant l'extrémité libre en direction de la paroi latérale opposée (3).

13. Goulotte de câbles (1) selon la revendication 12, dans laquelle la lame élastique (15) présente, dans sa direction d'extension (x) allant de la première paroi latérale (3) à la deuxième paroi latérale opposée (3), une longueur qui est inférieure à la distance entre les deux parois latérales (3).

14. Goulotte de câbles (1) selon l'une des revendications 11 à 13, dans laquelle la nervure de retenue (13) présente, à sa première extrémité, des moyens de serrage (14) pour la fixation de la nervure de retenue (13) sur au moins une languette (4) ou entre des languettes adjacentes (4) à la première paroi latérale (3), la nervure de retenue (13) présentant, à partir de la première extrémité, de préférence formée d'un seul tenant avec celle-ci, une lame élastique (15) avec laquelle la nervure de retenue (13) s'étend en direction de la paroi latérale opposée (3).

15. Goulotte de câbles (1) selon l'une des revendications 11 à 14, dans laquelle la nervure de retenue (13) est agencée dans le sens d'extension des languettes (4) en dessous de l'élargissement (8) et au-dessus, de préférence à distance du fond (2).

16. Goulotte de câbles (1) selon l'une des revendications 11 à 15, dans laquelle au moins une nervure de retenue élastique (13) s'étend depuis une première et une deuxième des deux parois latérales parallèles (3) à travers la goulotte de câbles (1) en direction de l'autre paroi latérale (3), les nervures de retenue (13) qui partent des parois latérales opposées (3) s'étendant par paires l'une vers l'autre et se rapprochant ou se chevauchant avec leurs extrémités libres jusqu'à une distance minimale.
